# EUROPÄISCHE PATENTSCHRIFT

(11) **EP 0 828 093 B1**
(45) Veröffentlichungstag und Bekanntmachung des Hinweises auf die Patenterteilung: **29.10.2003**
(21) Anmeldenummer: 97115475.2
(22) Anmeldetag: 05.09.1997
(51) Int. Cl.: F16H 25/24, F16H 19/00

(54) **Linearführungseinrichtung**
Linear guide arrangement
Dispositif de guidage linéaire

(30) Priorität: 06.09.1996 DE 19636272
(43) Veröffentlichungstag der Anmeldung: 11.03.1998
(73) Patentinhaber: Deutsche Star GmbH, 97424 Schweinfurt (DE)
(72) Erfinder: Dirschbacher, Josef, Dipl.-Ing. (FH), 97478 Knetzgau (DE); Rossteuscher, Heinz, Dipl.-Ing. (FH), 97525 Schwebheim (DE)
(74) Vertreter: Herzog, Markus, Dipl.-Phys. Dr.

(56) Entgegenhaltungen:
- EP-A- 0 327 705
- EP-A- 0 412 072
- EP-A- 0 482 268
- EP-A- 0 773 389
- WO-A-96/01198
- DE-C- 77 001
- DE-C- 4 120 500
- DE-U- 9 011 413
- DE-U- 9 105 342
- DE-U- 29 505 345
- GB-A- 2 106 821
- PATENT ABSTRACTS OF JAPAN vol. 014, no. 243 (M-0977), 23.Mai 1990 & JP 02 066359 A (NIPPON SEIKO KK), 6.März 1990,
- PATENT ABSTRACTS OF JAPAN vol. 014, no. 256 (M-0980), 4.Juni 1990 & JP 02 072254 A (NIPPON SEIKO KK), 12.März 1990,
- PATENT ABSTRACTS OF JAPAN vol. 007, no. 287 (M-264), 21.Dezember 1983 & JP 58 160665 A (HIROSHI TERAMACHI), 24.September 1983,

## Beschreibung

Die Erfindung betrifft eine Linearführungseinrichtung, umfassend eine Führungsbasis mit einer Längsachse, eine relativ zu der Führungsbasis in Richtung der Längsachse geführte Läuferbaugruppe, eine Linearantriebseinrichtung zum Antrieb der Läuferbaugruppe längs der Längsachse, wobei diese Linearantriebseinrichtung eine an mindestens einem ihrer Enden relativ zur Führungsbasis axial fest, jedoch drehbar gelagerte Antriebsspindel sowie eine mit der Antriebsspindel in Gewindeeingriff stehende Mutter umfaßt, welche zur Bewegung in Richtung der Längsachse mit der Läuferbaugruppe verbunden ist und gegen Drehung mit der Antriebsspindel sperrbar oder bremsbar ist, je mindestens eine relativ zu der Läuferbaugruppe in Richtung der Längsachse an der Führungsbasis geführte Spindelunterstützungseinheit axial zu beiden Seiten der Läuferbaugruppe, welche in Abhängigkeit von Bewegungen der Läuferbaugruppe längs der Längsachse innerhalb des jeweiligen Längsabstands zwischen der Läuferbaugruppe und einem zugehörigen Spindelende verstellbar sind.

Die maximale Bewegungsgeschwindigkeit der Läuferbaugruppe relativ zur Führungsbasis hängt bei einer derartigen Linearführungseinrichtung von der sogenannten kritischen Drehzahl der Antriebsspindel ab. Bei Erreichen der kritischen Drehzahl wird die Antriebsspindel in Eigenschwingungen versetzt, deren Amplitude eine präzise Positionierung der Läuferbaugruppe unmöglich macht. Maßgebliche Faktoren, die die kritische Drehzahl bestimmen, sind der Durchmesser der Spindel und ihre Länge. Je kleiner das Durchmesser/Längen-Verhältnis der Antriebsspindel ist, desto niedriger liegen die kritische Drehzahl der Antriebsspindel und dementsprechend die maximale Bewegungsgeschwindigkeit der Läuferbaugruppe. Da insbesondere bei großen Längen der Antriebsspindel (z.B. mehreren Metern) der Spindeldurchmesser aus Abmessungs- bzw. Gewichtsgründen nicht beliebig vergrößert werden kann, werden zusätzliche Spindelunterstützungseinheiten in den unterstützungsfreien Längsabschnitten der Antriebsspindel zwischen der Läuferbaugruppe und den Spindelenden angeordnet. Die Spindelunterstützungseinheiten stellen zusätzliche Stützstellen für die Antriebsspindel dar und verkürzen die Länge der unterstützungsfreien Spindelabschnitte. Die kritische Drehzahl der Antriebsspindel und die maximale Bewegungsgeschwindigkeit der Läuferbaugruppe werden auf diese Weise erhöht. Darüber hinaus verhindern die Spindelunterstützungseinheiten speziell bei langen Antriebsspindeln Durchbiegungen der Antriebsspindel. Die Spindelunterstützungseinheiten sind relativ zu der Läuferbaugruppe beweglich und abhängig von einer Bewegung der Läuferbaugruppe längs der Längsachse verstellbar, so daß sie den durch die Spindellänge vorgegebenen maximalen Verstellweg der Läuferbaugruppe längs der Längsachse nur um ihre jeweilige Baulänge verkürzen.

Die Figuren 8 und 9 zeigen eine z.B. aus der WO 96 01198 A bekannte Ausführungsform, die gemäß dem Oberbegriff des Anspruchs 1 den zur vorliegenden Erfindung nächstliegenden Stand der Technik bildet.
Axial beidseits einer Läuferbaugruppe 9s ist dort je eine Spindelunterstützungseinheit 27s, 29s angeordnet, die zusammen mit der Läuferbaugruppe 9s auf einer Führungsschiene 3s geführt sind. Die Läuferbaugruppe 9s ist mittels einer drehbaren und axial feststehenden Antriebsspindel 13s längs der Führungsschiene 3s antreibbar, wobei die Antriebsspindel 13s mit einer relativ zur Läuferbaugruppe 9s axial feststehenden und gegenüber dieser unverdrehbaren Spindelmutter in Eingriff steht. Die beiden Spindelunterstützungseinheiten 27s, 29s sind durch eine oder mehrere starre Verbindungsstangen 101s in festem Abstand voneinander gehalten. Innerhalb des Längsabstands zwischen den beiden Spindelunterstützungseinheiten 27s, 29s ist die Läuferbaugruppe 9s frei beweglich. Sobald die Läuferbaugruppe 9s an einer der Spindelunterstützungseinheiten 27s, 29s anstößt, nimmt sie bei Weiterbewegung längs der Führungsschiene 3s die beiden Spindelunterstützungseinheiten 27s, 29s in gleicher Richtung mit, und zwar schiebt sie die in Bewegungsrichtung vor ihr liegende Spindelunterstützungseinheit in unmittelbarer Anlage vor sich her, während sie die in Bewegungsrichtung hinter ihr liegende Spindelunterstützungseinheit im Abstand hinter sich herschleppt. Wird die Läuferbaugruppe 9s weiter bis zum Ende der Führungsschiene 3s bewegt, so werden die beiden Spindelunterstützungseinheiten 27s, 29s durch Anschlag der in Bewegungsrichtung vorderen Spindelunterstützungseinheit an einem geeigneten, führungsschienenfesten Gegenanschlag abrupt abgebremst, wobei die in Bewegungsrichtung hintere Spindelunterstützungseinheit trägheitsbedingt nachschiebt. Die dabei auf die Verbindungsstangen 101s aufgebrachten Schubkräfte können, insbesondere bei Vertikalanordnung, beachtlich sein, besonders wenn man bedenkt, daß Verfahrgeschwindigkeiten der Läuferbaugruppe 9s in der Größenordnung von 1 m/s oder mehr nicht unüblich sind und bei schweren durch die Linearführungseinrichtung zu bewegenden Lasten auch die Spindelunterstützungseinheiten 27s, 29s entsprechend massiv gebaut sein können. Um bei einer derartigen Schubbelastung nicht auszuknicken, müssen die Verbindungsstangen 101s sehr schubsteif sein und einen entsprechend großen Querschnitt haben, der in einer beengten Einsatzumgebung der Linearführungseinrichtung zu Platzproblemen führen kann. Dabei ist zu berücksichtigen, daß auch bei gezielter Abbremsung der Läuferbaugruppe vor Erreichen einer Endstellung diese gezielte Abbremsung der jeweils vorlaufenden Spindelunterstützungseinheit nicht mitgeteilt wird, weshalb diese vorlaufende Spindelunterstützungseinheit mit dem ihr von der Läuferbaugruppe noch vor der Abbremsung mitgeteilten Bewegungsimpuls gegen einen Anschlag stoßen kann. Außerdem ist das vergleichsweise hohe Gewicht der Verbindungsstangen 101s nachteilig, da einerseits die Linearführungseinrichtung insgesamt schwerer wird, andererseits die Verbindungsstangen 101s zu bewegende Massen darstellen.

Bei den Linearführungseinrichtungen, die in den Druckschriften JP 02066359 A und JP 02072254 A dargelegt sind, sind die beiden beidseits der Läuferbaugruppe angeordneten Spindelunterstützungseinheiten ebenfalls durch eine starre Verbindung aneinander gekoppelt und werden über einen flaschenzugartigen Antriebsmechanismus derart angetrieben, dass sich die Spindelunterstützungseinheiten mit der halben Geschwindigkeit der Läuferbaugruppe bewegen und somit immer in der Mitte zwischen der Läuferbaugruppe und dem jeweiligen Spindelende angeordnet sind. Ein derartiger flaschenzugartiger Antriebsmechanismus für Spindelunterstützungseinheiten einer Linearführungseinrichtung ist auch in der EP 077 389 A1 offenbart, deren Veröffentlichungsdatum nach dem Prioritätsdatum der vorliegenden Erfindung liegt.

Aus der EP 0 412 072 B1 ist eine Linearführungseinrichtung mit einem Spindeltrieb bekannt, bei der axial beidseits einer durch den Spindeltrieb zu bewegenden Läuferbaugruppe je eine zusätzliche Stützmutter zur Abstützung der Spindel vorgesehen s ist. Die beiden Stützmuttern sind weder miteinander bewegungsmäßig gekoppelt, noch stehen sie mit der Läuferbaugruppe in Antriebsverbindung. Sie sind jeweils als mit der Spindel im Gewindeeingriff stehende Kugelmutter ausgeführt, die sich bei Drehung der Spindel mit etwa der halben Bewegungsgeschwindigkeit der Läuferbaugruppe längs der Spindel fortbewegt. Diese Geschwindigkeitsreduzierung wird durch eine Gestaltung erreicht, bei der die Stützmuttern einen gegen Drehung mit der Spindel gesicherten Außenteil umfassen, an dessen Innenumfangsfläche mehrere zueinander parallele Kugellaufbahnen ausgebildet sind, welche orthogonal zur Spindelachse verlaufen, d.h. keine Steigung besitzen. Zwischen dem Außenteil und der Spindel ist ein relativ zu dem Außenteil drehbarer Kugelkäfig mit Ausnehmungen angeordnet, in denen einzelne Kugeln aufgenommen sind. Diese Kugeln stehen mit den Kugellaufbahnen des Außenteils und mit einem schraubenförmigen Gewinde an der Außenumfangsfläche der Spindel in Eingriff. Um die angegebene Gaschwindigkeitsreduzierung zu erreichen, müssen die Gewindesteigung der Spindel, das Radialspiel bzw. die Radialvorspannung der Kugeln zwischen den Laufbahnen des Außenteils und dem Gewinde der Spindel sowie das Radialspiel bzw. die Radialvorspannung in den Lagern zwischen dem Kugelkäfig und dem Außenteil geeignet aufeinander abgestimmt werden. Dies ist mit einem beträchtlichen Herstellungsaufwand verbunden.

Bei der EP 0 412 072 B1 sollen die Stützmuttern stets mittig zwischen der Läuferbaugruppe und dem jeweiligen Spindelende positioniert sein. Da jedoch die Stützmuttern nicht durch die Läuferbaugruppe zwangsweise verstellt werden, kann es vorkommen, daß sich eine ungleichmäßige Verteilung der Stützmuttern einstellt, bei der ein großer Längsabschnitt der Spindel keine zusätzliche Stützstelle besitzt und somit die Gefahr von Durchbiegungen besteht. Dies hängt damit zusammen, daß sich die Stützmuttern nicht exakt mit der halben Geschwindigkeit der Läuferbaugruppe bewegen und unter Umständen längs der Spindel bis zu einem Spindelende durchrutschen können.

Der Erfindung liegt das technische Problem zugrunde, bei einer Linearführungseinrichtung der eingangs bezeichneten Art mit einfachen Mitteln und geringem Platzbedarf dieser Mittel die Spindelunterstützungseinheiten stets so längs der Antriebsspindel positionieren zu können, daß Durchbiegungen und Eigenschwingungen der Antriebsspindel wirksam vermieden sind. Zur Lösung dieser Problemstellung wird eine Linearführungseinrichtung gemäß Anspruch 1 vorgeschlagen.

Bei der erfindungsgemäßen Lösung ist zur gegenseitigen Abstimmung der Bewegung der Spindelunterstützungseinheiten oder/und zur Herstellung der Abhängigkeit der Bewegungen der Spindelunterstützungseinheiten von der Bewegung der Läuferbaugruppe mindestens ein flexibles Zugmittel vorgesehen, das als Paarkopplungsmittel wirkt. Sie eignet sich für beliebige Anwendungsfälle, beispielsweise zum Tragen eines Werkzeugs oder eines Werkstücks in einer Bearbeitungsmaschine oder zur Führung eines Meßträgers in einer Meßeinrichtung. Das mindestens eine flexible Zugmittel kann von einem monofilen Draht aus Kunststoff oder Metall, einem Seil, insbesondere einem Drahtseil, einem Band oder einem Riemen gebildet sein. Seine Vorteile liegen in einem geringen Gewicht und einem kleinen. Platzbedarf. Diese Vorteile machen sich insbesondere bei sehr großen Spindellängen von mehreren Metern (beispielsweise bis zu 6 Meter oder mehr) bemerkbar, wenn man zum Vergleich die Abmessungen und das Gewicht der Verbindungsstangen der bekannten Ausführungsform heranzieht. Darüber hinaus fällt auch der Kostenaufwand für die flexiblen Zugmittel nur unwesentlich ins Gewicht.

Für Linearführungseinrichtungen mit großen Spindellängen empfiehlt es sich, auf beiden Seiten der Läuferbaugruppe mehrere zusätzliche Stützstellen für die Antriebsspindel vorzusehen. Es wird daher in Weiterbildung der Erfindung vorgeschlagen, daß zu beiden Seiten der Läuferbaugruppe je mindestens zwei Spindelunterstützungseinheiten vorgesehen sind, wobei zwei der Läuferbaugruppe jeweils nähere Spindelunterstützungseinheiten auf beiden Seiten der Läuferbaugruppe ein läufernäheres Paar bilden und zwei der Läuferbaugruppe jeweils fernere Spindelunterstützungseinheiten auf beiden Seiten der Läuferbaugruppe ein läuferferneres Paar bilden und wobei zumindest innerhalb eines dieser Paare die Spindelunterstützungseinheiten in ihren Bewegungen gegenseitig abgestimmt sind. Durch die Paarbildung der Spindelunterstützungseinheiten und die gegenseitige Bewegungsabstimmung innerhalb dieser Paare können dabei in beiden Bewegungsrichtungen der Läuferbaugruppe gleiche Abstützverhältnisse für die Antriebsspindel erreicht werden.

Bei der Erfindung ist vorgesehen, daß die Spindelunterstützungseinheiten mindestens eines Paars von beidseits der Läuferbaugruppe angeordneten Spindelunterstützungseinheiten durch mindestens ein gewünschtenfalls unter Einschluß von Schleifenschlußmitteln zu einer Schleife geschlossenes flexibles Paarkoppelungsmittel in ihren Bewegungen gegenseitig abgestimmt sind, welches an den Spindelunterstützungseinheiten angreift und im Bereich der Spindelenden durch Umlenkmittel umgelenkt ist. Das als Paarkoppelungsmittel eingesetzte flexible Zugmittel erfüllt die gleiche Funktion wie die starren Verbindungsstangen bei der bekannten Ausführungsform, nämlich die beiden beidseits der Läuferbaugruppe angeordneten Spindelunterstützungseinheiten in festem Abstand voneinander zu halten und so in ihren Bewegungen gegenseitig abzustimmen. Allerdings ist hier keine schubsteife Verbindung zwischen beiden Spindelunterstützungseinheiten mehr vorhanden; vielmehr wird bei Anstoßen einer der Spindelunterstützungseinheiten an einem Spindelende die jeweils andere Spindelunterstützungseinheit durch denjenigen Abschnitt des zugkraftübertragenden Paarkoppelungsmittels abgebremst, der von der einen Spindelunterstützungseinheit über die Umlenkmittel zu dieser anderen Spindelunterstützungseinheit verläuft und dort zugfest angreift. Obwohl diese Ausführungsform auf den ersten Blick einen gegenüber den Verbindungsstangen der bekannten Ausführungsform erhöhten Bauteilaufwand erscheinen läßt (wegen der Umlenkmittel an den Spindelenden), ist doch die besonders bei großen Spindellängen erhebliche Platz- und Gewichtseinsparung zu berücksichtigen, die diesen Bauteilaufwand rechtfertigt. Für den Fall, daß zwei oder mehr Paare von beidseits der Läuferbaugruppe angeordneten Spindelunterstützungseinheiten vorhanden sind, wird man zweckmäßigerweise die Spindelunterstützungseinheiten jedes dieser Paare durch ein flexibles Paarkoppelungsmittel miteinander koppeln.

Die Verstellung der Spindelunterstützungseinheiten bei Bewegung der Läuferbaugruppe wird dadurch erreicht , daß die Spindelunterstützungseinheiten eines durch ein flexibles Paarkoppelungsmittel gegenseitig bewegungsabgestimmten Paars von Spindelunterstützungseinheiten durch eine Anschlagverbindung zwischen der Läuferbaugruppe und jeweils einer der beiden Spindelunterstützungseinheiten verstellbar sind. Bei dieser Lösung nimmt die Läuferbaugruppe bei einer Bewegung in Richtung auf ein Spindelende das Paar von Spindelunterstützungseinheiten in gleicher Richtung und mit gleicher Geschwindigkeit mit. Da die Läuferbaugruppe dabei die in Bewegungsrichtung hinter ihr liegende Spindelunterstützungseinheit in axialem Abstand mitschleppt, ist bei einer Annäherung der Läuferbaugruppe an ein Spindelende stets gewährleistet, daß sich dann in dem Spindelabschnitt der Antriebsspindel zwischen der Läuferbaugruppe und dem jeweils anderen Spindelende in ausreichendem Abstand von der Läuferbaugruppe mindestens eine zusätzliche Stützstelle für die Antriebsspindel befindet. Sind mehrere Paare von beidseits der Läuferbaugruppe angeordneten Spindelunterstützungseinheiten vorhanden, so kann dieses Prinzip der Verstellung der Spindelunterstützungseinheiten durch eine Anschlagverbindung dahingehend ausgeweitet werden, daß die Spindelunterstützungseinheiten mindestens eines Paars von läuferferneren Spindelunterstützungseinheiten, die durch ein flexibles Paarkoppelungsmittel gegeriseitig bewegungsabgestimmt sind, durch eine Anschlagverbindung zwischen einer läufernäheren Spindelunterstützungseinheit und jeweils einer der beiden läuferferneren Spindelunterstützungseinheiten verstellbar sind.

Häufig wird es genügen, wenn eine Spindelunterstützungseinheit einen aus einem gleitgünstigen Material, insbesondere Kunststoff, gefertigten Spindelumfassungskörper mit einer Durchgangsbohrung aufweist, welche von der Spindel gleitbeweglich durchsetzt ist. Dies kann z.B. eine Gleithülse sein. Es ist jedoch auch denkbar, in einer Spindelunterstützungseinheit eine in Gewindeeingriff mit der Antriebsspindel stehende Stützmutter vorzusehen. Man kann dann eine handelsübliche Mutter als Stützmutter verwenden, wie sie beispielsweise auch für den Antrieb der Läuferbaugruppe zum Einsatz kommt. Insbesondere kann man eine Kugelmutter mit mindestens einer endlosen Kugelreihe als Stützmutter verwenden. Eine solche Stützmutter kann eine perfekte Führung der Antriebsspindel in der Spindelunterstützungseinheit gewährleisten. Dabei ist jedoch folgendes zu bedenken:

Durch die Verstellbarkeit der Spindelunterstützungseinheit durch eine Anschlagverbindung mit der Läuferbaugruppe oder einer läufernäheren Spindelunterstützungseinheit ergibt sich zeitweilig die Situation eines Stillstands der Spindelunterstützungseinheit bei Bewegung der Läuferbaugruppe. Wenn nun die Stützmutter gegen Drehung mit der Antriebsspindel gesperrt wäre, würde sie sich bei Drehung der Antriebsspindel mit der gleichen Geschwindigkeit wie die Läuferbaugruppe bewegen. Daher muß eine Ausgleichsmöglichkeit geschaffen werden, damit sich die jeweilige Spindelunterstützungseinheit mit einer anderen Geschwindigkeit (ggf. Geschwindigkeit Null) als die Läuferbaugruppe bewegen kann. Diese Ausgleichsmöglichkeit kann darin bestehen, daß die Stützmutter in der Spindelunterstützungseinheit axial unbeweglich, aber derart drehbar gelagert ist, daß eine einer vorgegebenen Abhängigkeit zwischen der Bewegung der Läuferbaugruppe und der Bewegung der jeweiligen Spindelunterstützungseinheit entsprechende Geschwindigkeitsdifferenz dieser beiden Längsbewegungen durch Rotation der Stützmutter ermöglicht ist. Dabei wird man die Steigung des von der Antriebsspindel und der Stützmutter gebildeten Gewindetriebs, die durch Radialspiel oder Radialvorspannung bestimmten Reibungsverhältnisse zwischen Stützmutter und Antriebsspindel sowie die Reibungsverhältnisse innerhalb der zwischen der Stützmutter und der Spindelunterstützungseinheit angeordneten Lager geeignet aufeinander abstimmen, um die jeweilige Fallkonstellation (z. B. Stillstand der Spindelunterstützungseinheit bei Längsbewegung der Läuferbaugruppe) verwirklichen zu können.

Die Verwendung einer Stützmutter in einer Spindelunterstützungseinheit hat darüber hinaus den Vorteil einer hohen Verschleißfestigkeit. Wenn man zur Unterstützung der Antriebsspindel eine Gleithülse verwendet, so kann insbesondere bei gerollten Spindeln, also Spindeln mit einer durch ein Rollenwerkzeug hergestellten Gewindenut, ein Abrieb der Gleithülse durch Materialaufwerfungen auftreten, die beim Rollen der Spindel zwischen einzelnen Windungen entstehen können. Zwar ist dieser Abrieb bei geschliffenen Spindeln geringer. Dennoch kann man durch Verwendung einer Stützmutter, insbesondere einer Kugelmutter, den Verschleiß in der Spindelunterstützungseinheit erheblich reduzieren.
Bevorzugt läßt sich dieser Gedanke bei einer Spindelunterstützungseinheit anwenden, die einen Kugelgewindetrieb mit mindestens einer endlosen Kugelreihe umfaßt, welche auf einem Teil ihrer Länge einem Gewindeweg an der Innenumfangsfläche der Stützmutter folgt und auf einem Restweg durch einen Rücklaufkanal der Stützmutter verläuft.
Die Führungsbasis kann mindestens eine Führungsfläche aufweisen, an der sowohl die Läuferbaugruppe als auch Spindelunterstützungseinheiten geführt sind. Alternativ kann zur Führung der Spindelunterstützungseinheiten und der Läuferbaugruppe mindestens je eine gesonderte Führungsfläche an der Führungsbasis vorgesehen sein. Anstatt die Läuferbaugruppe unmittelbar auf der Führungsbasis zu führen, ist es auch denkbar, daß an der Führungsbasis eine Sekundärführungsschiene geführt ist, auf welcher zwei Spindelunterstützungseinheiten unbeweglich angeordnet sind, und daß die Läuferbaugruppe auf dieser Sekundärführungsschiene relativ zu den beiden Spindelunterstützungseinheiten in Richtung der Längsachse beweglich geführt ist.

Die Erfindung ist nicht auf eine bestimmte Gestaltung der Führungsbasis beschränkt. Die Führungsbasis kann z.B. von einem massiven Trägerbett gebildet sein, auf dem eine oder mehrere Führungsschienen befestigt sind. Bei einer bevorzugten Ausführungsform ist vorgesehen, daß die Führungsbasis ein Führungsgehäuse mit einen Führungshohlraum begrenzenden Wänden umfaßt und die Läuferbaugruppe und die Spindalunterstützungseinheiten in dem Führungshohlraum aufgenommen sind, wobei die Läuferbaugruppe eine Längsöffnung des Führungsgehäuses durchsetzt und außerhalb des Führungshohlraums zur Aufnahme eines in Richtung der Längsachse zu bewegenden Objekts ausgebildet ist. Dabei kann dann innerhalb des Führungsholhraums mindestens eine Führungsschiene für die Führung der Läuferbaugruppe oder/und der Spindelunterstützungseinheiten an dem Führungsgehäuse befestigt sein. Die Läuferbaugruppe und die Spindelunterstützungseinheiten sind bevorzugt durch Wälzkörper an der Führungsbasis geführt, beispielsweise durch Kugeln, tonnenförmige Rollen oder scheibenförmige Laufrollen. Insbesondere können die Läuferbaugruppe oder/und die Spindelunterstützungseinheiten mindestens eine endlose Wälzkörperschleife zu ihrer Führung auf der Führungsbasis aufweisen. Es ist aber auch eine Gleitlagerung der Läuferbaugruppe und der Spindelunterstützungseinheiten denkbar.

Zweckmäßigerweise verläuft das mindestens eine flexible Zugmittel wenigstens zum Teil innerhalb des Führungshohlraums. Dies bietet sich an, weil das mindestens eine flexible Zugmittel auf diese Weise vor Beschädigung und Verschmutzung geschützt ist. Besonders vorteilhaft ist es dann, wenn das mindestens eine flexible Zugmittel zumindest auf einem Teil seiner Länge in einer zum Führungshohlraum hin offenen Zugmittelaufnahmenut aufgenommen ist, welche in einer der den Führungshohlraum begrenzenden Wände ausgebildet ist. Einerseits wird das mindestens eine flexible Zugmittel in der Zugmittelaufnahmenut perfekt geschützt, andererseits kann so auch bei beengten Platzverhältnissen innerhalb des Führungshohlraums das mindestens eine flexible Zugmittel wenigstens zum Teil innerhalb des Führungshohlraums geführt werden. Wenn das Führungsgehäuse ein Profilgehäuse mit einer oder mehreren längsverlaufenden Befestigungsnuten ist, kann vorteilhafterweise eine dieser Befestigungsnuten ohne konstruktiven Mehraufwand als Zugmittelaufnahmenut dienen.

Zweckmäßigerweise wird das in der Zugmittelaufnahmenut aufgenommene Zugmittel oder dessen jeweiliger Teil an einem dieser Zugmittelaufnahmenut benachbarten Umrißbereich der Läuferbaugruppe oder/und mindestens einer Spindelunterstützungseinheit beweglich vorbeigeführt oder befestigt sein. Dabei kann das in der Zugmittelaufnahmenut aufgenommene Zugmittel oder dessen jeweiliger Teil an einem Vorsprung der Läuferbaugruppe oder/und einem Vorsprung mindestens einer Spindelunterstützungseinheit befestigt sein, welcher in die Zugmittelaufnahmenut hineinragt.

Eine weitere geschützte Unterbringungsart für das mindestens eine flexible Zugmittel kann darin bestehen, daß es zumindest auf einem Teil seiner Länge in einem von dem Führungshohlraum getrennten Zugmittelaufnahmekanal verläuft. Diese Lösung bietet sich insbesondere an, weil das mindestens eine flexible Zugmittel als flexibles Paarkoppelungsmittel ausgebildet ist. Man kann somit ein rücklaufendes Trum dieses flexiblen Paarkoppelungsmittels in dem Zugmittelaufnahmekanal führen und im Bereich der zugehörigen Umlenkmittel aus dem Zugmittelaufnahmekanal austreten lassen.

Um die in dem Führungshohlraum aufgenommenen Komponenten, wie etwa die Läuferbaugruppe, die Spindelunterstützungseinheiten sowie gegebenenfalls das mindestens eine flexible Zugmittel, gegen Eindringen von Schmutz zu schützen, ist der Führungshohlraum im Bereich seiner Längsöffnung bevorzugt durch ein Abdeckband abgedeckt, welches entweder mit der Läuferbaugruppe in Antriebsverbindung steht oder durch die Läuferbaugruppe hindurchgeführt ist.

Zur Vereinfachung der Montage der erfindungsgemäßen Linearführungseinrichtung wird weiter vorgeschlagen, daß das mindestens eine flexible Zugmittel oder/und ein mit der Läuferbaugruppe in Antriebsverbindung stehendes Abdeckband in mindestens einem Endbereich des Führungsgehäuses über ein durch Kapselungsmittel gekapseltes Umlenkmittel verläuft, wobei dieses Umlenkmittel gesondert von den Kapselungsmitteln in dem betreffenden Endbereich des Führungsgehäuses anbringbar ist und das zugehörige Kapselungsmittel nach Anbringung des Umlenkmittels in Kapselungsstellung gegenüber dem Umlenkmittel an dem Führungsgehäuse oder/und an einer Führungsschiene dieses Führungsgehäuses oder/und an dem Umlenkmittel befestigbar ist. Es kann dann nämlich zunächst das Umlenkmittel ohne zugehöriges Kapselungsmittel angebracht werden, so daß anschließend das mindestens eine flexible Zugmittel oder/und das Abdeckband ohne Behinderung durch das Kapselungsmittel problemlos aufgelegt werden können. Die Anbringung des Kapselungsmittels erfolgt erst im Anschluß daran.

Die Erfindung wird im folgenden anhand einiger bevorzugter Ausführungsbeispiele näher erläutert. Es stellen dar:
- Fig. 1: schematisch eine erste Ausführungsform der erfindungsgemäßen Linearführungseinrichtung mit zwei beidseits einer Läuferbaugruppe angeordneten Spindelunterstützungseinheiten, die über ein flexibles Paarkoppelungsmittel gegenseitig bewegungsabgestimmt sind,
- Fig. 2: schematisch eine weitere Ausführungsform der erfindungsgemäßen Linearführungseinrichtung, die die Ausführungsform nach der Fig. 1 insofern ergänzt, als sie zusätzlich ein zweites Paar von beidseits der Läuferbaugruppe angeordneten Spindelunterstützungseinheiten aufweist, die ebenfalls über ein flexibles Paarkoppelungsmittel in ihren Bewegungen gegenseitig abgestimmt sind,
- Fig. 3: eine Ansicht von der Seite her auf ein konkretes Realisierungsbeispiel einer Linearführungseinrichtung nach der Fig. 2,
- Fig. 4.: eine Ansicht von oben auf die Linearführungseinrichtung der Fig. 3,
- Fig. 5: einen Schnitt längs der Linie V-V der Fig. 3,
- Fig. 6: einen Schnitt längs der Linie VI-VI der Fig. 3,

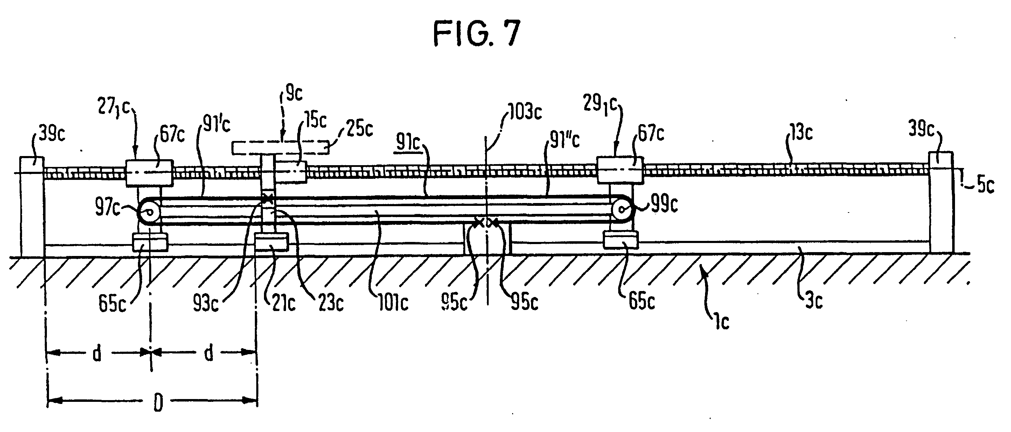

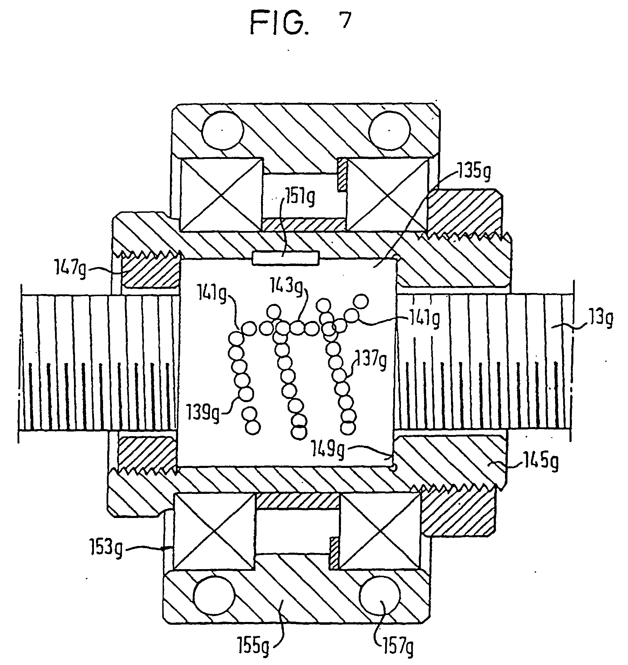

- Fig. 7: ein Ausführungsbeispiel einer Spindelunterstützungseinheit mit einer in Gewindeeingriff mit einer Antriebsspindel stehenden Stützmutter,
- Fig. 8: eine Ansicht von der Seite her auf eine Linearführungseinrichtung nach dem Stand der Technik und
- Fig. 9: eine Ansicht von oben her auf die Linearführungseinrichtung der Fig. 8.

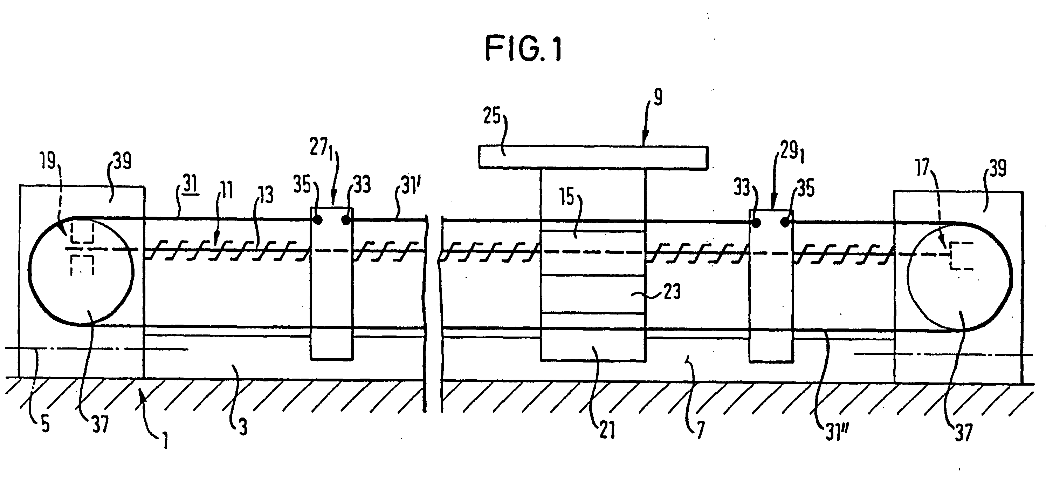

In Fig. 1 ist eine Führungsbasis 1 gezeigt, auf der eine Führungsschiene 3 mit einer Längsachse 5 befestigt ist. Die Führungsschiene 3 weist mindestens eine Führungsfläche 7 auf, an der eine Läuferbaugruppe 9 längs der Längsachse 5 verschiebbar geführt ist. Der Antrieb der Läuferbaugruppe 9 längs der Längsachse 5 erfolgt mittels einer Spindelantriebseinrichtung 11, welche eine Antriebsspindel 13 mit einer zur Längsachse 5 parallelen Spindelachse sowie eine mit der Antriebsspindel 13 in Gewindeeingriff stehende Mutter 15 umfaßt. Die Antriebsspindel 13 ist an ihren Enden drehbar gelagert, und zwar an ihrem in Fig. 1 rechten Ende in einem schematisch angedeuteten Festlager 17, welches die Antriebsspindel 13 axial fest hält, und an ihrem in Fig. 1 linken Ende in einem ebenfalls nur schematisch angedeuteten Loslager 19, welches axiale Ausgleichsbewegungen der Antriebsspindel 13 beispielsweise aufgrund thermischer Ausdehnung erlaubt. Auf der Seite des Festlagers 17 kann die Antriebsspindel 13 durch einen nicht näher dargestellten Antriebsmotor, beispielsweise einen Elektromotor, in Drehung versetzt werden. Die Mutter 15 ist axial unbeweglich und verdrehsicher mit der Läuferbaugruppe 9 verbunden, so daß bei einer Drehung der Antriebsspindel 13 die Läuferbaugruppe 9 mit einer Geschwindigkeit längs der Längsachse 5 bewegt wird, welche dem Produkt der Drehzahl der Antriebsspindel 13 und der Steigung des zwischen der Antriebsspindel 13 und der Mutter 15 gebildeten Gewindes entspricht. Die Läuferbaugruppe 9 umfaßt einen auf der Führungsschiene 3 wälzoder gleitgelagerten Läufer 21, welcher mit einem die Mutter 15 aufnehmenden Anschlußteil 23 verbunden ist. Auf dem Anschlußteil 23 ist ein Tisch 25 befestigt, auf den ein zu bewegendes Objekt, beispielsweise ein Werkzeug oder ein Werkstück, aufgesattelt werden kann. Die Läuferbaugruppe 9 muß jedoch nicht in dieser Weise als Träger zu bewegender Lasten ausgeführt sein. Anstelle des Tisches 25 kann auch ein Mitnehmer vorgesehen sein, der in Eingriff mit einem zu bewegenden Objekt steht, ohne dabei eine Lasttragefunktion zu übernehmen.

Der von der Antriebsspindel 13 und der Mutter 15 gebildete Spindeltrieb ist vorzugsweise als Wälzkörperschraubtrieb, insbesondere Kugelschraubtrieb, mit mindestens einem. Wälzkörperumlauf ausgebildet, welcher mit einer endlosen Reihe von Wälzkörpern besetzt ist. Die Außenumfangsfläche der Antriebsspindel 13 kann dabei mindestens eine schraubenförmig um die Spindelachse verlaufende Gewindenut aufweisen, in die die Wälzkörper des Wälzkörperumlaufs eingreifen. Es ist aber auch denkbar, eine an ihrer Außenumfangsfläche glatte Antriebsspindel 13 zu verwenden, bei der die lastübertragenden Wälzkörper zwischen der Mutter 15 und der Antriebsspindel 13 derart radial vorgespannt sind, daß eine axiale Fortbewegung der Mutter 15 infolge des Reibeingriffs zwischen diesen Wälzkörpern und der glatten Außenumfangsfläche der Antriebsspindel 13 ermöglicht ist.

Um besonders bei langen oder sehr dünnen Antriebsspindeln die Gefahr von Durchbiegungen zu vermeiden und die kritische Drehzahl der Antriebsspindel 13, bei der sie zu Eigenschwingungen angeregt wird, in einen Bereich heraufzusetzen, der auch bei kleinen Durchmesser/Längen-Verhältnissen der Antriebsspindel 13 ausreichende Verfahrgeschwindigkeiten der Läuferbaugruppe 9 längs der Längsachse 5 ermöglicht, ist beidseits der Läuferbaugruppe 9 je eine Spindelunterstützungseinheit 27₁ und 29₁ vorgesehen, die zusätzliche Stützstellen für die Antriebsspindel 13 in den freien Spindelabschnitten zwischen der Läuferbaugruppe 9 und dem jeweiligen Spindelende bilden. Die Spindelunterstützungseinheiten 27₁ und 29₁ sind relativ zu der Läuferbaugruppe 9 längs der Längsachse 5 beweglich, wobei sie an der Führungsfläche 7 der Führungsschiene 3 geführt sind. Durch ein als Zugseil ausgeführtes flexibles Paarkoppelungsmittel 31 sind die beiden Spindelunterstützungseinheiten 27₁ und 29₁ miteinander gekoppelt. Dabei ist ein zwischen den beiden Spindelunterstützungseinheiten 27₁ und 29₁ verlaufender ersten Zugseilabschnitt 31' beweglich an der Läuferbaugruppe 9 vorbeigeführt und an Festpunkten 33 an den Spindelunterstützungseinheiten 27₁, 29₁ befestigt. Ein weiterer, zweiter Zugseilabschnitt 31'' ist an Festpunkten 35 an den beiden Spindelunterstützungseinheiten 27₁, 29₁ befestigt und an den beiden Enden der Führungsbasis 1 durch Umlenkrollen 37 umgelenkt. Der zweite Zugseilabschnitt 31'' bildet zwischen den beiden Umlenkrollen 37 ein rücklaufendes Trum des zu einer endlosen Schleife geschlossenen Zugseils 31, dessen oberes Trum von dem ersten Zugseilabschnitt 31' gebildet ist. Durch das Zugseil 31 werden die beiden Spindelunterstützungseinheiten 27₁ und 29₁ in festem Abstand voneinander gehalten und erfahren eine synchrone Bewegung, sobald eine der Spindelunterstützungseinheiten 27₁, 29₁ in Bewegung versetzt wird.

Wenn sich die Läuferbaugruppe 9 bei Drehung der Antriebsspindel 13 aus der in Fig. 1 gezeigten Position nach links bewegt, verbleibt die Spindelunterstützungseinheit 27₁ und damit auch die Spindelunterstützungseinheit 29₁ solange im Stillstand, bis die Läuferbaugruppe 9 an der Spindelunterstützungseinheit 27₁ anschlägt. Bei einer Weiterbewegung der Läuferbaugruppe 9 werden dann die beiden Spindelunterstützungseinheiten 27₁, 29₁ in gleicher Bewegungsrichtung mitgenommen, wobei die Läuferbaugruppe 9 die vor ihr liegende Spindelunterstützungseinheit 27₁ in unmittelbarer Anlage vor sich herschiebt, während die hinter ihr liegende Spindelunterstützungseinheit 29₁ in maximalem Abstand folgt. Wenn die Läuferbaugruppe 9 dann das linke Ende der Führungsbasis 1 erreicht, kommt die Spindelunterstützungseinheit 27₁ an einem nicht näher dargestellten Anschlag oder Puffer dieses linken Endes der Führungsbasis 1 zu liegen, wobei der zweite Zugseilabschnitt 31'' eine Rückhaltezugkraft auf die Spindelunterstützungseinheit 29₁ ausübt, die diese Spindelunterstützungseinheit abbremst. Bei einer Bewegung der Läuferbaugruppe 9 in umgekehrter Richtung längs der Längsachse 5, d.h. in Fig. 1 nach rechts, ergeben sich entsprechend umgekehrte Verhältnisse.

Die Antriebsspindel 13 wird bei dem Ausführungsbeispiel der Fig. 1 durch die in Bewegungsrichtung jeweils hinter der Läuferbaugruppe 9 liegende Spindelunterstützungseinheit 27₁ oder 27₁ stets in einem mittleren Bereich abgestützt (wenn auch nicht genau in der Mitte zwischen der Läuferbaugruppe 9 und dem jeweiligen Ende der Führungsbasis 1), so daß auch dann die Gefahr von Durchbiegungen der Antriebsspindel 13 wirksam vermieden ist und keine allzu langen unterstützungsfreien Spindelabschnitte existieren, wenn sich die Läuferbaugruppe 9 bereits nahe eines Endes der Führungsbasis 1 befindet.

Das Festlager 17 und das Loslager 19 für die Antriebsspindel 13 können zusammen mit den Umlenkrollen 37 und ggf. Spannmitteln zum Spannen des Zugseils 31 in Endtraversen 39 zusammengefaßt sein, welche als Baueinheiten an den Enden der Führungsbasis 1 anbaubar sind.

Für die in den weiteren Figuren gezeigten Ausführungsbeispiele werden gleiche Bezugsziffern, jeweils ergänzt um einen Kleinbuchstaben, verwendet, soweit es sich um gleiche oder gleichwirkende Komponenten handelt. Zur Vermeidung von Wiederholungen wird auf die vorangehende Beschreibung dieser Komponenten verwiesen.

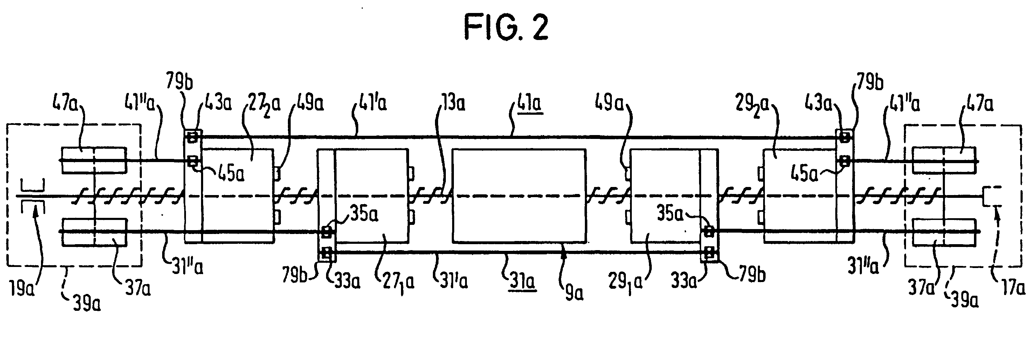

Fig. 2 ist eine schematische Darstellung einer Linearführungseinrichtung bei einer gedachten Blickrichtung von oben her. Aus Gründen der Übersichtlichkeit ist die Führungsbasis in dieser Schemadarstellung nicht gezeigt. Es ist jedoch selbstverständlich, daß auch hier mindestens ein der Führungsschiene 3 der Fig. 1 vergleichbares Führungselement zur Führung der Läuferbaugruppe und der Spindelunterstützungseinheiten vorgesehen ist.

Das Ausführungsbeispiel der Fig. 2 unterscheidet sich von dem der Fig. 1 im wesentlichen dadurch, daß zusätzlich zu den Spindelunterstützungseinheiten 27₁a und 29₁a ein weiteres, zweites Paar von beidseits der Läuferbaugruppe 9a angeordneten Spindelunterstützungseinheiten 27₂a und 29₂a zur Abstützung der Antriebsspindel 13a vorgesehen ist. Die Spindelunterstützungseinheit 27₂a ist zwischen der Spindelunterstützungseinheit 27₁a und dem in Fig. 2 linken Ende der Führungsbasis angeordnet, während die Spindelunterstützungseinheit 29₂a zwischen der Spindelunterstützungseinheit 29₁a und dem in Fig. rechten Ende der Führungsbasis angeordnet ist. Somit bilden die Spindelunterstützungseinheiten 27₁a und 29₁a ein läufernäheres Paar von Spindelunterstützungseinheiten und die Spindelunterstützungseinheiten 27₂a und 29₂a ein läuferferneres Paar von Spindelunterstützungseinheiten. Entsprechend dem Zugseil 31a ist ein weiteres Zugseil 41a vorgesehen, um die beiden Spindelunterstützungseinheiten 27₂a und 29₂a miteinander zu koppeln. Dabei verläuft ein erster, beweglich an der Läuferbaugruppe 9a und den Spindelunterstützungseinheiten 27₁a, 29₁a vorbeigeführter Zugseilabschnitt 41'a zwischen den beiden Spindelunterstützungseinheiten 27₂a und 29₂a und greift an Festpunkten 43a an den Spindelunterstützungseinheiten 27₂a, 29₂a an. Ein zweiter Zugseilabschnitt 41''a ist an Festpunkten 45a an den Spindelunterstützungseinheiten 27₂a, 29₂a befestigt und über einen weiteren Satz von Umlenkrollen 47a geführt, welche zusammen mit den Umlenkrollen 37a an den Enden der Führungsbasis angeordnet sind. Aufgrund der gewählten Blickrichtung ist das rücklaufende Trum beider Zugseile 31a und 41a nicht zu erkennen.

Wie das Zugseil 31a dient auch das Zugseil 41a als flexibles Paarkoppelungsmittel für die Spindelunterstützungseinheiten 27₂a, 29₂a und verbindet diese beiden Spindelunterstützungseinheiten 27₂a, 29₂a zur gemeinsamen, synchronen Bewegung. Bei einer Bewegung der Läuferbaugruppe 9a in. Fig. 2 nach links stößt die Läuferbaugruppe 9a zunächst an der Spindelunterstützungseinheit 27₁a an und nimmt infolge das läufernähere Paar von Spindelunterstützungseinheiten 27₁a, 29₁a mit gleicher Geschwindigkeit mit. Dabei befinden sich die beiden Spindelunterstützungseinheiten 27₂a und 29₂a zunächst im Stillstand. Dann erreicht die von der Läuferbaugruppe 9a vor sich hergeschobene Spindelunterstützungseinheit 27₁a die Spindelunterstützungseinheit 27₂a und schlägt an dieser an. Daraufhin wird auch das läuferfernere Paar von Spindelunterstützungseinheiten 27₂a, 29₂a in Bewegung gesetzt, und zwar mit gleicher Geschwindigkeit wie die Läuferbaugruppe 9a. Die Spindelunterstützungseinheiten 29₁a und 29₂a weisen dann maximalen Abstand von der Läuferbaugruppe 9a und voneinander auf, so daß in Bewegungsrichtung hinter der Läuferbaugruppe 9a stets für eine optimale Abstützung der Antriebsspindel 13a gesorgt ist. Bei einer Bewegung der Läuferbaugruppe 9a in Fig. 2 nach rechts gelten entsprechend umgekehrte Verhältnisse. An den Stirnseiten der Spindelunterstützungseinheiten 27₁a bis 29₂a können Pufferelemente 49a zur Dämpfung des Aufpralls untereinander oder mit der Läuferbaugruppe 9a angebracht sein.

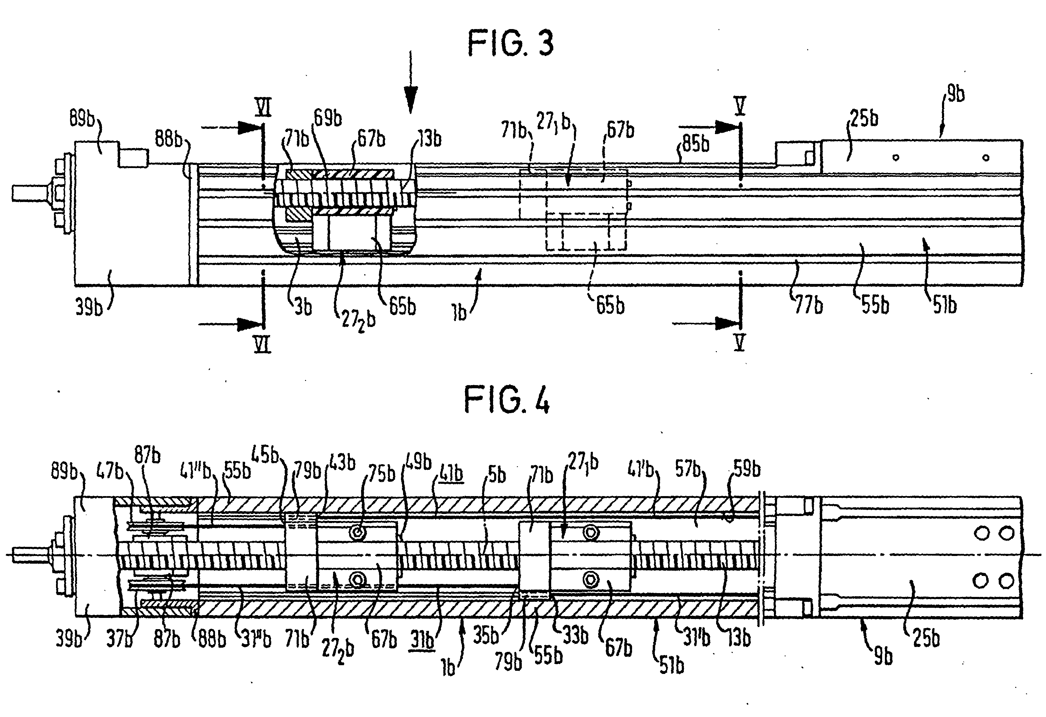

Die Figuren 3 bis 6 zeigen ein konkretes Realisierungsbeispiel der in Fig. 2 nur schematisch dargestellten Linearführungseinrichtung. Die Führungsbasis 1b ist bei diesem Ausführungsbeispiel von einem Profil-Führungsgehäuse 51b mit einer Bodenwand 53b und zwei zu der Bodenwand 53b annähernd senkrechten und zueinander parallelen Seitenwänden 55b gebildet. Die Bodenwand 53b und die Seitenwände 55b begrenzen zwischen sich einen Führungshohlraum 57b, in dem die Läuferbaugruppe 9b sowie die Spindelunterstützungseinheiten aufgenommen sind. Da die Figuren 3 und 4 nur eine Hälfte der Linearführungseinrichtung zeigen, sind lediglich die Spindelunterstützungseinheiten 27₁b und 27₂b erkennbar, wobei selbstverständlich den Spindelunterstützungseinheiten 29₁a und 29₂a der Fig. 2 entsprechende Spindelunterstützungseinheiten auch hier vorhanden sind. Im Bereich der der Bodenwand 53b fernen Enden der Seitenwände 55b weist das Führungsgehäuse 51b eine Längsöffnung 59b auf (siehe Fig. 4), durch die hindurch die Verbindung des Anschlußteils 23b der Läuferbaugruppe 9b mit dem Tisch 25b hergestellt ist. Die Führungsschiene 3b ist in eine Bodennut 61b in der dem Führungshohlraum 57b zugewandten Seite der Bodenwand 53b eingesetzt und dort durch Befestigungsschrauben 63b befestigt.

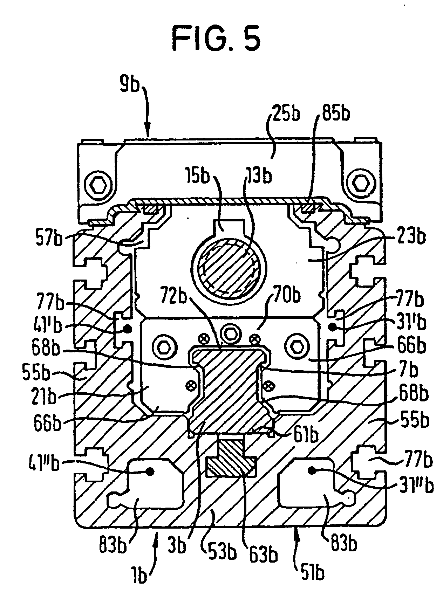

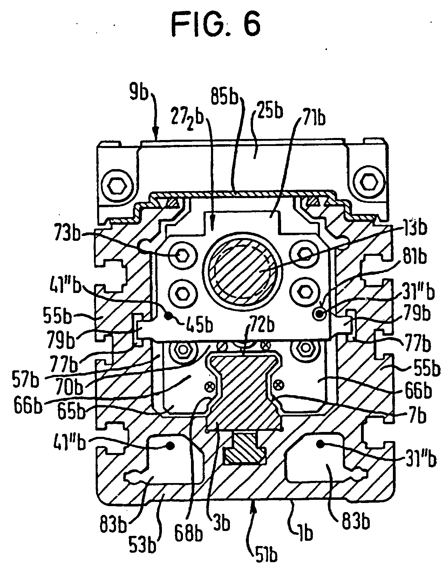

Die Spindelunterstützungseinheiten 27₁b und 27₂b weisen jeweils ein Führungselement 65b auf, das die Spindelunterstützungseinheiten auf der Führungsschiene 3b führt. Die Führungselemente 65b und der Läufer 21b der Läuferbaugruppe 9b können identische Bauteile sein, wobei handelsübliche Serienelemente zum Einsatz kommen können. Die Figuren 5 und 6 lassen erkennen, daß der Läufer 21b der Läuferbaugruppe 9b und die Führungselemente 65b der Spindelunterstützungseinheiten die Führungsschiene 3b U-förmig umgreifen, wobei sie mit zwei beidseits der Führungsschiene 3b angeordneten Schenkelteilen 66b Seitenflächen 68b der Führungsschiene 3b benachbart liegen und mit einem die Schenkelteile 66b verbindenden Stegteil 70b einer der Bodenwand 53b fernen Kopffläche 72b der Führungsschiene 3b benachbart liegen. In den Schenkelteilen 66b des Läufers 21b und der Führungselemente 65b können endlose Wälzkörperschleifen integriert sein, deren lastübertragende Wälzkörperabschnitte mit den an den Seitenflächen 68b der Führungsschiene 3b vorgesehenen Führungsflächen 7b in Wälzeingriff stehen. Zur Abstützung der Antriebsspindel 13b weisen die Spindelunterstützungseinheiten ein Abstützelement 67b auf, das an dem jeweiligen Führungselement 65b befestigt ist und von der Antriebsspindel 13b durchsetzt ist. Bei dem Ausführungsbeispiel der Figuren 3 bis 6 ist das Abstützelement 67b als vorzugsweise aus Kunststoff gefertigte Gleithülse mit einer Durchgangsbohrung 69b ausgeführt, deren Durchmesser geringfügig größer als der Durchmesser der Antriebsspindel 13b ist und in der die Antriebsspindel 13b gleitbeweglich geführt ist. Ferner weisen die Spindelunterstützungseinheiten ein an einer Stirnseite der jeweiligen Spindelunterstützungseinheit angebrachtes Klemmstück 71b auf, das die Festpunkte 33b, 35b bzw. 43b, 45b zur Befestigung der Zugseile 31b und 41b bereitstellt. Das Klemmstück 71b kann an dem Abstützelement 67b oder an dem Führungselement 65b der jeweiligen Spindelunterstützungseinheit unter Vermittlung von Befestigungsschrauben 73b (siehe Fig. 6) befestigt sein. Weitere Befestigungsschrauben 75b (siehe Fig. 4) dienen der Befestigung des Abstützelements 67b an dem Führungselement 65b der jeweiligen Spindelunterstützungseinheit.

Aus den Figuren 5 und 6 ist zu erkennen, daß das Führungsgehäuse 51b eine Mehrzahl von hinterschnittenen T-Profilnuten 77b sowohl an seiner Außenseite als auch seiner dem Führungshohlraum 57b zugekehrten Innenseite aufweist. Diese Profilnuten 77b können zur Befestigung des Führungsgehäuses 51b an einer übergeordneten Konstruktion oder zur Befestigung von Anbauteilen an dem Führungsgehäuse 51b verwendet werden. An der dem Führungshohlraum 57b zugekehrten Innenseite der Seitenwände 55b vorgesehene Profilnuten 77b dienen darüber hinaus dazu, das obere Trum 31'b bzw. 41'b der Zugseile 31b und 41b aufzunehmen. Hierdurch kann einerseits den beengten Platzverhältnissen innerhalb des Führungshohlraums 57b Rechnung getragen werden, andererseits kann so ein Schutz vor Beschädigung der Zugseile 31b, 41b sichergestellt werden. Um das obere Trum 31'b bzw. 41'b der Zugseile 31b und 41b in ihrer zugehörigen Profilnut 77b zu halten, weisen die Klemmstücke 71b der Spindelunterstützungseinheiten einen in die jeweilige Profilnut 77b hineinragenden, nasenartigen Vorsprung 79b auf, an dem im Falle des oberen Trums 31'b des Zugseils 31b der Festpunkt 33b vorgesehen ist und im Falle des oberen Trums 41'b des Zugseils 41b der Festpunkt 43b vorgesehen ist. Zum besseren Verständnis sind diese Vorsprünge 79b zusätzlich in die Darstellung der Fig. 2 eingezeichnet.

Der zweite Zugseilabschnitt 31''b des Zugseils 31b ist an dem Festpunkt 35b an dem Klemmstück 71b der Spindelunterstützungseinheit 27₁b befestigt und durch ein Durchlaufloch 81b (siehe Fig.6) in dem Klemmstück 71b der Spindelunterstützungseinheit 27₂b beweglich hindurchgeführt. Das von dem Zugseilabschnitt 31''b gebildete rücklaufende Trum des Zugseils 31b ist in einer Hohlkammer 83b geführt, welche getrennt von dem Führungshohlraum 57b in der Bodenwand 53b des Führungsgehäuses 51b ausgebildet ist. Der zweite Zugseilabschnitt 41''b des Zugseils 41b ist an dem Festpunkt 45b des Klemmstücks 71b der Spindelunterstützungseinheit 27₂b befestigt, wobei das von diesem zweiten Zugseilabschnitt 41''b gebildete rücklaufende Trum des Zugseils 41b ebenfalls in einer Hohlkammer 83b des Führungsgehäuses 51b geführt ist. Es ist darauf hinzuweisen, daß in Fig. 6 der in der Darstellung linke Vorsprung 79b zu dem Klemmstück 71b der Spindelunterstützungseinheit 27₂b gehört, während der auf der rechten Seite dieses Klemmstücks 71b angedeutete Vorsprung 79b zu dem Klemmstück 71b der läufernäheren Spindelunterstützungseinheit 27₁b gehört. Die Zugseilabschnitte 31'b und 41'b sowie die zugehörigen Festpunkte 33b und 43b sind in dieser Fig. 6 nicht erkennbar, da sie in der Blickrichtung der Fig. 6 durch die Vorsprünge 79b verdeckt sind.

Im Bereich der Längsöffnung 59b ist der Führungshohlraum 57b durch ein Abdeckband 85b abgedeckt, um das Eindringen von Schmutz in den Führungshohlraum 57b zu verhindern. Das Abdeckband kann aus Metall oder aus Kunststoff bestehen und entweder über geeignete Umlenkungen durch die Läuferbaugruppe 9b hindurchgeführt sein oder mit der Läuferbaugruppe 9b in Antriebsverbindung stehen und dabei durch Umlenkungen an den Enden des Führungsgehäuses 51b umgelenkt sein.

In Fig. 4 erkennt man, daß die Umlenkrollen 37b und 47b an Umlenkrollenträgern 87b gelagert sind. Diese Umlenkrollenträger 87b sind mit Befestigungsflanschen 88b verbunden, welche an den Stirnenden des Führungsgehäuses 51b lösbar befestigt sind. Die Umlenkrollen 37b, 47b und die Umlenkrollenträger 87b sind durch Kapselungselemente 89b gekapselt. Die Kapselungselemente 89b liegen unter Vermittlung der Befestigungsflansche 88b an den Enden des Führungsgehäuses 51b an und sind entweder an den Befestigungsflanschen 88b oder/und an dem Führungsgehäuse 51b befestigt, so daß die Umlenkrollen 37b, 47b mit den Umlenkrollenträgern 37b zunächst gesondert an dem Führungsgehäuse 51b angebaut werden können und danach die Kapselungselemente 89b angebracht werden können. Die Kapselungselemente 89b können ihrerseits einteilig mit der jeweiligen Traverse 39b ausgebildet sein. Damit ist eine Vereinfachung beim Zusammenbau der Linearführungseinrichtung gewährleistet, weil die Zugseile 31b, 41b problemlos über die noch unverkapselten Umlenkrollen 37b, 47b gelegt und mit den Spindelunterstützungseinheiten verbunden werden können. Das Spannen der Zugseile 31b, 41b kann beispielsweise dadurch erfolgen, daß die Umlenkrollen 37b, 47b gegenüber den Umlenkrollenträgern 87b oder diese Umlenkrollenträger 87b gegenüber dem Führungsgehäuse 51b verstellbar sind.

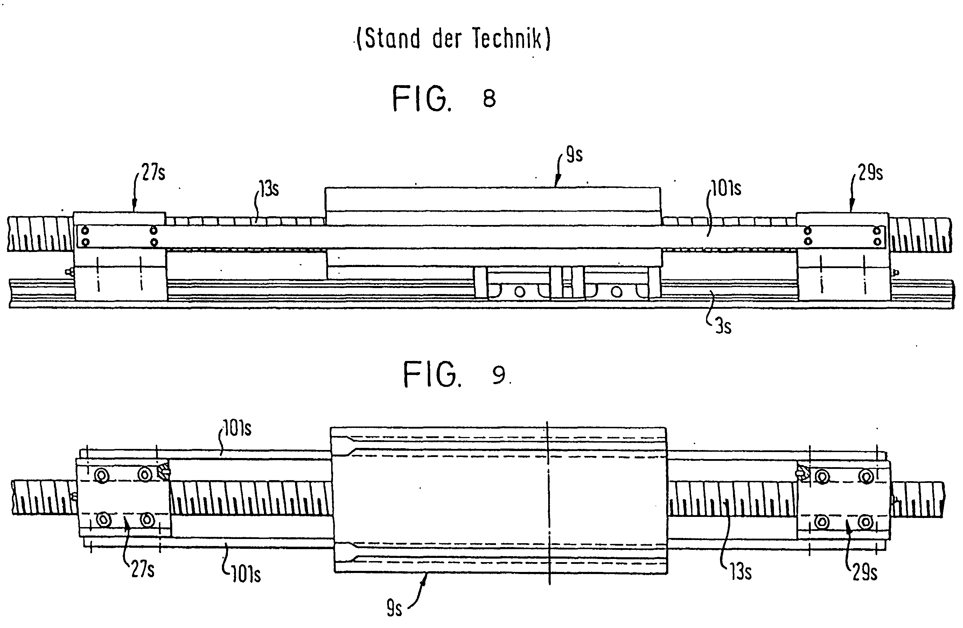

Fig. 8 zeigt ein Beispiel einer Spindelunterstützungseinheit mit einer in Gewindeeingriff mit einer Antriebsspindel 13g stehenden Stützmutter 135g. Die Stützmutter 135g weist mindestens eine schematisch angedeutete endlose Kugelreihe 137g auf, welche von einem schraubenförmig um die Spindelachse verlaufenden Abschnitt 139g, zwei an diesen Abschnitt 139g anschließenden Bogenabschnitten 141g sowie einem die beiden Bogenabschnitte 141g verbindenden Rücklaufabschnitt 143g gebildet ist. Die Kugeln des Abschnitts 139g sind in einer nicht näher dargestellten schraubenförmig verlaufenden Gewindenut in der Innenumfangsfläche der Stützmutter 135g geführt. Gleichzeitig stehen sie mit der Außenumfangsfläche der Antriebsspindel 13g in Eingriff, welche - wie bereits früher erwähnt - mit einem Gewinde versehen oder glatt sein kann.

Die Bogenabschnitte 141g und der Rücklaufabschnitt 143g der Kugelreihe 137g sind in einem nicht näher dargestellten Rücklaufkanal der Stützmutter 135g geführt. Die Stützmutter 135g kann ein herkömmliches Serienteil sein, wie es auch für gewöhnliche Kugelgewindetriebe verwendet wird. Sie ist in eine Hülse 145g eingeschoben und in dieser mittels eines Sicherungsrings 147g und einer Anschlagschulter 149g an der Innenumfangsfläche der Hülse 145g axial unbeweglich aufgenommen. Durch eine radial vorstehende Nase 151g, welche in eine zugehörige Aussparung in der Innenumfangsfläche der Hülse 145g eingreift, ist die Stützmutter 135g drehfest mit der Hülse 145g verbunden. Die Hülse 145g ist ihrerseits über eine Kugel- oder Rollenlagereinrichtung 153g, insbesondere eine Radial- oder Schrägkugellagereinrichtung, in einem Außenring 155g aufgenommen. Dieser Außenring 155g ist zur drehfesten Verbindung mit dem (in Figur 8 nicht dargestellten) Führungselement 65b einer Spindelunterstützungseinheit der Linearführungseinrichtung nach den Figuren 3 bis 6 oder mit einem nicht näher dargestellten Gehäuse vorgesehen, das letztendlich an der Führungsbasis der Linearführungseinrichtung längsbeweglich geführt ist.

Will man die Anordnung der Fig. 8 beispielsweise für eine Spindelunterstützungseinheit verwenden, die wie bei den Ausführungsbeispielen der Fig. 1 bis 6 auch bei Drehung der Antriebsspindel 13g zeitweilig stillstehen soll, so wird man das Radialspiel in der Lagereinrichtung 153g so groß und das Radialspiel zwischen der Stützmutter 135g und der Antriebsspindel 13g so klein bemessen und die Steigung des zwischen Stützmutter 135g und Antriebsspindel 13g gebildeten Gewindetriebs so wählen, daß bei Drehung der Antriebsspindel 13g die Stützmutter 135g mitsamt der Hülse 145g mit gleicher Drehgeschwindigkeit wie die Antriebsspindel 13g, also ohne Relativdrehung zur Antriebsspindel 13g, innerhalb des Außenrings 155g rotieren kann, ohne daß der Außenring 155g und damit die gesamte Spindelunterstützungseinheit eine Axialbewegung erfährt.

## Patentansprüche

1. Linearführungseinrichtung, umfassend:
- eine Führungsbasis (1) mit einer Längsachse (5),
- eine relativ zu der Führungsbasis (1) in Richtung der Längsachse (5) geführte Läuferbaugruppe (9),
- eine Linearantriebseinrichtung (11) zum Antrieb der Läuferbaugruppe (9) längs der Längsachse (5),
wobei diese Linearantriebseinrichtung eine an mindestens einem ihrer Enden relativ zur Führungsbasis (1) axial fest, jedoch drehbar gelagerte Antriebsspindel (13) sowie eine mit der Antriebsspindel (13) in Gewindeeingriff stehende Mutter (15) umfasst, welche zur Bewegung in Richtung der Längsachse (5) mit der Läuferbaugruppe (9) verbunden ist und gegen Drehung mit der Antriebsspindel sperrbar oder bremsbar ist,
- je mindestens eine relativ zu der Läuferbaugruppe (9) in Richtung der Längsachse (5) an der Führungsbasis (1) geführte
Spindelunterstützungseinheit (27₁, 29₁) axial zu beiden Seiten der Läuferbaugruppe (9), welche in Abhängigkeit von Bewegungen der Läuferbaugruppe (9) längs der Längsachse (5) innerhalb des jeweiligen Längsabstands zwischen der Läuferbaugruppe (9) und einem zugehörigen Spindelende verstellbar sind,
wobei die Spindelunterstützungseinheiten (27₁, 29₁) mindestens eines Paars von beidseits der Läuferbaugruppe (9) angeordneten
Spindelunterstützungseinheiten (27₁, 29₁) durch mindestens ein Paarkoppelungsmittel in ihren Bewegungen gegenseitig abgestimmt sind, welches an den Spindelunterstützungseinheiten (27₁, 29₁) angreift, und
wobei die Spindelunterstützungseinheiten (27₁, 29₁) eines durch das Paarkoppelungsmittel gegenseitig bewegungsabgestimmten Paars von Spindelunterstützungseinheiten (27₁, 29₁) durch eine Anschlagverbindung zwischen der Läuferbaugruppe (9) und jeweils einer der beiden Spindelunterstützungseinheiten (27₁, 29₁) verstellbar sind,
**dadurch gekennzeichnet, dass** als Paarkoppelungsmittel wenigstens ein zu einer Schleife geschlossenes . flexibles Zugmittel (31) vorgesehen ist, das im Bereich der Spindelenden durch Umlenkmittel (37) umgelenkt ist.

2. Linearführungseinrichtung nach Anspruch 1, **dadurch gekennzeichnet, daß** zu beiden Seiten der Läuferbaugruppe (9a) je mindestens zwei Spindelunterstützungseinheiten (27₁a, 27₂a, 29₁a, 29₂a) vorgesehen sind, wobei zwei der Läuferbaugruppe (9a) jeweils nähere Spindelunterstützungseinheiten (27₁a, 29₁a) auf beiden Seiten der Läuferbaugruppe (9a) ein läufernäheres Paar bilden und zwei der Läuferbaugruppe (9a) jeweils fernere Spindelunterstützungseinheiten (27₂a, 29₂a) auf beiden Seiten der Läuferbaugruppe (9a) ein läuferferneres Paar bilden und wobei zumindest innerhalb eines dieser Paare ( 27₁a-29₁a, 27₂a-29₂a) die Spindelunterstützungseinheiten in ihren Bewegungen gegenseitig abgestimmt sind.

3. Linearführungseinrichtung nach Anspruch 2, **dadurch gekennzeichnet, daß** für jedes der Paare von beidseits der Läuferbaugruppe (9a) angeordneten Spindelunterstützungseinheiten (27₁a-29₁a, 27₂a-29₂a) ein flexibles Paarkoppelungsmittel (31a, 41a) vorgesehen ist.

4. Linearführungseinrichtung nach Anspruch 2 oder 3,
**dadurch gekennzeichnet, daß** die Spindelunterstützungseinheiten mindestens eines Paars von läuferfernerem Spindelunterstützungseinheiten (27₂a, 29₂a), die durch ein flexibles Paarkoppelungsmittel (41a) gegenseitig bewegungsabgestimmt sind, durch eine Anschlagverbindung zwischen einer läufernäheren Spindelunterstützungseinheit (27₁a, 29₁a) und jeweils einer der beiden läuferferneren Spindelunterstützungseinheiten (27₂a, 29₂a) verstellbar sind.

5. Linearführungseinrichtung nach einem der Ansprüche 1 bis 4, **dadurch gekennzeichnet, daß** eine Spindelunterstützungseinheit (27₁b, 27₂b) einen aus einem gleitgünstigen Material, insbesondere Kunststoff, gefertigten Spindelumfassungskörper (67b) mit einer Durchgangsbohrung (69b) aufweist, welche von der Spindel (13b) gleitbeweglich durchsetzt ist.

6. Linearführungseinrichtung nach einem der Ansprüche 1 bis 5, **dadurch gekennzeichnet, daß** eine Spindelunterstützungseinheit eine in Gewindeeingriff mit der AntriebsSpindel (13g) stehende Stützmutter (135g) umfaßt, welche in der Spindelunterstützungseinheit axial unbeweglich, aber derart drehbar gelagert ist, daß eine einer vorgegebenen Abhängigkeit zwischen der Bewegung der Läuferbaugruppe und der Bewegung der jeweiligen Spindelunterstützungseinheit entsprechende Geschwindigkeitsdifferenz dieser beiden Längsbewegungen durch Rotation der Stützmutter (135g) ermöglicht ist.

7. Linearführungseinrchtung nach einem der Ansprüche 1 bis
6, **dadurch gekennzeichnet, daß** die Führungsbasis (1) mindestens eine Führungsfläche (7) aufweist, an der sowohl die Läuferbaugruppe (9) als auch, Spindelunterstützungseinheiten (27₁, 29₁) geführt sind.

8. Linearführungseinrichtung nach einem der Ansprüche 1 bis
6, **dadurch gekennzeichnet, daß** zur Führung der Spindelunterstützungseinheiten und der Läuferbaugruppe mindestens je eine gesonderte Führungsfläche an der Führungsbasis vorgesehen ist.

9. Linearführungseinrichtung nach einem der Ansprüche 1 bis
8, **dadurch gekennzeichnet, daß** die Führungsbasis (1b) ein Führungsgehäuse (51b) mit einen Führungshohlraum (57b) begrenzenden Wänden (53b, 55b) umfaßt und die Läuferbaugruppe (9b) und die Spindelunterstützungseinheiten (27₁b, 27₂b) in dem Führungshohlraum (57b) aufgenommen sind, wobei die Läuferbaugruppe (9b) eine Längsöffnung (59b) des Führungsgehäuses (51b) durchsetzt und außerhalb des Führungshohlraums (57b) zur Aufnahme eines in Richtung der Längsachse zu bewegenden Objekts ausgebildet ist.

10. Linearführungseinrichtung nach Anspruch 9, **dadurch gekennzeichnet, daß** innerhalb des Führungshohlraums (57b) mindestens eine Führungsschiene (3b) für die Führung der Läuferbaugruppe (9b) oder/und der Spindelunterstützungseinheiten (27₁b, 27₂b) an dem Führungsgehäuse (51b) befestigt ist.

11. Linearführungseinrichtung nach Anspruch 9 oder 10, **dadurch gekennzeichnet, daß** das mindestens eine flexible Zugmittel (31b, 41b) wenigstens zum Teil innerhalb des Führungshohlraums (57b) verläuft.

12. Linearführungseinrichtung nach Anspruch 11, **dadurch gekennzeichnet, daß** das mindestens eine flexible Zugmittel (31b, 41b) zumindest auf einem Teil seiner Länge in einer zum Führungshohlraum (57b) hin offenen Zugmittelaufnahmenut (77b) aufgenommen ist, welche in einer der den Führungshohlraum (57b) begrenzenden Wände (53b, 55b) ausgebildet ist.

13. Linearführungseinrichtung nach Anspruch 12, **dadurch gekennzeichnet, daß** das in der Zugmittelaufnahmenut (77b) aufgenommene Zugmittel (31b, 41b) oder dessen jeweiliger Teil an einem dieser Zugmittelaufnahmenut (77b) benachbarten Umrißbereich der Läuferbaugruppe (9b) oder/und mindestens einer Spindelunterstützungseinheit (27₁b, 27₂b) beweglich vorbeigeführt oder befestigt ist.

14. Linearführungseinrichtung nach Anspruch 13, **dadurch gekennzeichnet, daß** das in der Zugmittelaufnahmenut (77b) aufgenommene Zugmittel (31b, 41b) oder dessen jeweiliger Teil an einem Vorsprung der Läuferbaugruppe (9b) oder/und einem Vorsprung (79b) mindestens einer Spindelunterstützungseinheit (27₁b, 27₂b) befestigt ist, welcher in die Zugmittelaufnahmenut (77b) hineinragt.

15. Linearführungseinrichtung nach einem der Ansprüche 9 bis 14, **dadurch gekennzeichnet, daß** das mindestens eine flexible Zugmittel (31b, 41b) zumindest auf einem Teil seiner Länge in einem von dem Führungshohlraum (57b) getrennten Zugmittelaufnahmekanal (83b) verläuft.

16. Linearführungseinrichtung nach einem der Ansprüche 9 bis 15, **dadurch gekennzeichnet, daß** der Führungshohlraum (57b) im Bereich seiner Längsöffnung (59b) durch ein Abdeckband (85b) abgedeckt ist, welches entweder mit der Läuferbaugruppe (9b) in Antriebsverbindung steht oder durch die Läuferbaugruppe (9b) hindurchgeführt ist.

17. Linearführungseinrichtung nach einem der Ansprüche 9 bis 16, **dadurch gekennzeichnet, daß** das mindestens eine flexible Zugmittel (31b, 41b) oder/und ein mit der Läuferbaugruppe (9b) in Antriebsverbindung stehendes Abdeckband (85b) in mindestens einem Endbereich des Führungsgehäuses (51b) über ein durch Kapselungsmittel (89b) gekapseltes Umlenkmittel (37b, 47b) verläuft, wobei dieses Umlenkmittel (37b, 47b) gesondert von den Kapselungsmitteln (89b) in dem betreffenden Endbereich des Führungsgehäuses (51b) anbringbar ist und das zugehörige Kapselungsmittel (89b) nach Anbringung des Umlenkmittels (37b, 47b) in Kapselungsstellung gegenüber dem Umlenkmittel (37b, 47b) an dem Führungsgehäuse (51b) oder/und an einer Führungsschiene (3b) dieses Führungsgehäuses (51b) oder/und an dem Umlenkmittel (37b, 47b) befestigbar ist.

18. Linearführungseinrichtung nach Anspruch 6, **dadurch gekennzeichnet, daß** die Spindelunterstützungseinheit einen Kugelgewindetrieb mit mindestens einer endlosen Kugelreihe (137g) umfaßt, welche auf einem Teil ihrer Länge einem Gewindeweg an der Innenumfangsfläche der Stützmutter (135g) folgt und auf einem Restweg durch einen Rücklaufkanal der Stützmutter (135g) verläuft.

## Claims

1. A linear guide device, comprising
- a guide base (1) having a longitudinal axis (5),
- a runner assembly (9) guided relative to said guide base (1) in the direction of said longitudinal axis (5),
- a linear drive means (11) for driving said runner assembly (9) along said longitudinal axis (5), said linear drive means including a drive spindle (13) supported at at least one of its ends axially fixed, but rotatable, relative to said guide base (1), and including a nut (15) being in threaded engagement with said drive spindle (13), said nut (15) being connected with said runner assembly (9) for movement in the direction of said longitudinal axis (5) and being lockable or brakable against rotation with said drive spindle,
- at least one spindle support unit (27₁, 29₁) at each of axially both sides of said runner assembly (9), each said spindle support unit (27₁, 29₁) being guided relative to said runner assembly (9) on said guide base (1) in the direction of said longitudinal axis (5), said spindle support units (27₁, 29₁) being displaceable along said longitudinal axis (5) within a respective longitudinal distance between said runner assembly (9) and a respective spindle end in dependence on movements of said runner assembly (9),
wherein the spindle support units (27₁, 29₁) of at least one pair of spindle support units (27₁, 29₁) arranged at either side of said runner assembly (9) are mutually adapted in their movements by at least one pair coupling means engaging with said spindle support units (27₁, 29₁) and
wherein the spindle support units (27₁, 29₁) of a pair of spindle support units (27₁, 29₁) whose movements are mutually adapted by means of a pair coupling means, are displaceable by means of an abutment connection between said runner assembly (9) and one of both said spindle support units (27₁, 29₁),
**characterized in that**
the pair coupling means is provided as a flexible traction means (31) closed to form a loop and being reversed by reversing means (37) in the region of said spindle ends.

2. The linear guide device according to claim 1, **characterized in that** at each of both sides of said runner assembly (9a) at least two spindle support units (27₁a, 27₂a, 29₁a, 29₂a) are provided, two of these spindle support units (27₁a,29₁a) each being closer to said runner assembly (9a) on either side thereof forming a pair closer to said runner assembly (9a) and two of these spindle support units (27₂a, 29₂a) each being more distant from said runner assembly (9a) on either side thereof forming a pair more distant from said runner assembly (9a) the movements of said spindle support units being mutually adapted at least among one of these pairs (27₁a - 29₁a, 27₂a - 29₂a).

3. The linear guide device according to claim 2, **characterized in that** for each of the pairs of spindle support units (27₁a - 29₁a, 27₂a - 29₂a) arranged at either side of said runner assembly (9a) a flexible pair couplings means (31a, 41a) is provided.

4. The linear guide device according to claim 2 or 3, **characterized in that** the spindle support units of at least one pair of spindle support units (27₂a, 29₂a) being more distant from said runner assembly (9a), the movements of these spindle support units (27₂a, 29₂a) being mutually adapted by means of a flexible pair coupling means (41a) are displaceable by means of an abutmend connection between a spindle support unit (27₁a, 29₁a) being closer to said runner assembly (9a) and one of both said spindle support units (27₂a, 29₂a) being more distant from said runner assembly (9a).

5. The linear guide device according to any of the claims 1 to 4, **characterized in that** a spindle support unit (27₁b, 27₂b) comprises a spindle embracing member (67b) made of a material which slides easily, especially plastics, said spindle embracing member (67b) having a through-bore (69b), said spindle (13b) extending through said through-bore (69b) for sliding movement.

6. The linear guide device according to any of the claims 1 to 5, **characterized in that** a spindle support unit includes a support nut (135g) being in threaded engagement with said drive spindle (13g), said support nut (135g) being supported in said spindle support unit axially fixed, but rotatable such that a speed difference corresponding to a given interdependence between an axial movement of said runner assembly and an axial movement of said spindle support unit, namely a speed difference between these two axial movements, is permitted by rotation of said support nut (135g).

7. The linear guide device according to any of the claims 1 to 6, **characterized in that** said guide base (1) comprises at least one guide surface (7) on which said runner assembly (9) as well as said spindle support units (27₁, 29₁) are guided.

8. The linear guide device according to any of the claims 1 to 6, **characterized in that** at least one each individual guide surface is provided on said guide base for guiding said spindle support units and said runner assembly.

9. The linear guide device according to any of the claims 1 to 8, **characterized in that** said guide base (1b) includes a guide housing (51b) having walls (53b, 55b) defining a guide cavity (57b) said runner assembly (9b) and said spindle support units (27₁b, 27₂b) being received within said guide cavity (57b), said runner assembly (9b) extending through a longitudinal opening (59b) of said guide housing (51b) and being adapted outside of said guide cavity (57b) for receiving an object to be moved in the direction of said longitudinal axis.

10. The linear guide device according to claim 9, **characterized in that** within said guide cavity (57b) at least one guide rail (3b) is mounted to said guide housing (51b) for guiding at least one of said runner assembly (9b) and said spindle support units (27₁b, 27₂b).

11. The linear guide device according to claim 9 or 10, **characterized in that** said at least one flexible traction means (31b, 41b) extends at least in part within said guide cavity (57b).

12. The linear guide device according to claim 11, **characterized in that** said at least one flexible traction means (31b, 41b) is received at least on a part of its length within a traction means receiving groove (77b) which is open towards said guide cavity (57b) and is formed in one of said walls (53b, 55b) defining said guide cavity (57b).

13. The linear guide device according to claim 12, **characterized in that** said traction means (31b, 41b) received in said traction means receiving groove (77b) or its respective part is movably guided past, or fixed to, a contour portion of at least one of said runner assembly (9b) and a spindle support unit (27₁b, 27₂b), said contour portion being adjacent said traction means receiving groove (77b).

14. The linear guide device according to claim 13, **characterized in that** said traction means (31b, 41b) received within said traction means receiving groove (77b) or its respective part is secured to at least one of a projection of said runner assembly (9b) and a projection (79b) of at least one spindle support unit (27₁b, 27₂b), which projection extends into said traction means receiving groove (77b).

15. The linear guide device according to any of the claims 9 to 14, **characterized in that** said at least one flexible traction means (31b, 41b) extends on at least a part of its length within a traction means receiving channel (83b) separate from said guide cavity (57b).

16. The linear guide device according to any of the claims 9 to 15, **characterized in that** said guide cavity (57b) is covered by a cover band (85b) in the region of its longitudinal opening (59b) which cover band (85b) either is in driving connection with said runner assembly (9b) or is passed through said runner assembly (9b).

17. The linear guide device according to any of the claims 9 to 16, **characterized in that** at least one of said flexible traction means (31b, 41b) and a cover band (85b) being in driving connection with said runner assembly (9b) runs in at least one end portion of said guide housing (51b) over a reversing means (37b, 47b) encapsulated by an encapsulating means (89b), said reversing means (37b, 47b) being mountable separately from said encapsulating means (89b), in the respective end portion of said guide housing (51b), said respective encapsulating means (89b), after having mounted said reversing means (37b, 47b), being mountable in encapsulating position with respect to said reversing means (37b, 47b) to at least one of said guide housing (51b) and a guide rail (3b) of said guide housing (51b) and said reversing means (37b, 47b).

18. The linear guide device according to claim 6, **characterized in that** said spindle support unit includes a ball screw drive having at least one endless row of balls (137g) which on a part of its lengths follows a thread path on the inner circumferential surface of said support nut (135g) and extends on a remaining path through a return channel of said support nut (135g).

## Revendications

1. Dispositif de guidage linéaire, comprenant :
- une base de guidage (1) avec un axe longitudinal (5),
- un ensemble curseur (9) guidé par rapport à la base de guidage (1) dans la direction de l'axe longitudinal (5),
- un dispositif d'entraînement linéaire (11) pour entraîner l'ensemble curseur (9) le long de l'axe longitudinal (5), ce dispositif d'entraînement linéaire comprenant une broche d'entraînement (13) montée à au moins une de ses extrémités de manière fixe axialement, mais rotative par rapport à la base de guidage (1), ainsi qu'un écrou (15) en prise filetée avec la broche d'entraînement (13), qui est relié à l'ensemble curseur (9) pour un mouvement dans la direction de l'axe longitudinal (5) et peut être bloqué ou freiné contre une rotation avec la broche d'entraînement,
- à chaque fois au moins une unité de soutien de broche (27₁, 29₁) guidée sur la base de guidage (1) de manière mobile par rapport à l'ensemble curseur (9) dans la direction de l'axe longitudinal (5), axialement de chaque côté de l'ensemble curseur (9), unités qui sont mobiles en fonction de mouvements de l'ensemble curseur (9) le long de l'axe longitudinal (5) à l'intérieur de la distance longitudinale respective séparant l'ensemble curseur (9) d'une extrémité de broche associée,
les unités de soutien de broche (27₁, 29₁) d'au moins une paire d'unités de soutien de broche (27₁, 29₁) disposées des deux côtés de l'ensemble curseur (9) ayant des mouvements mutuellement coordonnés par au moins un moyen de couplage de paire qui se met en prise sur les unités de soutien de broche (27₁, 29₁), et les unités de soutien de broche (27₁, 29₁) d'une paire d'unités de soutien de broche (27₁, 29₁) aux mouvements mutuellement coordonnés par le moyen de couplage de paire pouvant être déplacées par une liaison à butée entre l'ensemble curseur (9) et à chaque fois l'une des deux unités de soutien de broche (27₁, 29₁),
**caractérisé en ce qu'**il est prévu comme moyen de couplage de paire au moins un moyen de traction (31) flexible fermé en boucle, qui est renvoyé par des moyens de renvoi (37) au niveau des extrémités de la broche.

2. Dispositif de guidage linéaire selon la revendication 1, **caractérisé en ce qu'**au moins deux unités de soutien de broche (27₁a, 27₂a, 29₁a, 29₂a) sont prévues à chaque fois des deux côtés de l'ensemble curseur (9a), deux unités de soutien de broche (27₁a, 29₁a) plus proches de l'ensemble curseur (9a) formant des deux côtés de l'ensemble curseur (9a) une paire plus proche du curseur et deux unités de soutien de broche (27₂a, 29₂a) plus éloignées de l'ensemble curseur (9a) formant des deux côtés de l'ensemble curseur (9a) une paire plus éloignée du curseur, et les unités de soutien de broche d'au moins de l'une de ces paires (27₁a-29₁a, 27₂a-29₂a) présentant des mouvements mutuellement coordonnés.

3. Dispositif de guidage linéaire selon la revendication 2, **caractérisé en ce qu'**un moyen de couplage de paire (31a, 41a) flexible est prévu pour chacune des paires d'unités de soutien de broche (27₁a-29₁a, 27₂a-29₂a) placées des deux côtés de l'ensemble curseur (9a).

4. Dispositif de guidage linéaire selon la revendication 2 ou 3, **caractérisé en ce que** les unités de soutien de broche d'au moins une paire d'unités de soutien de broche (27₂a, 29₂a) plus éloignées du curseur, dont les mouvements sont coordonnés par un moyen de couplage de paire (41a) flexible, peuvent être déplacés par une liaison à butée entre une unité de soutien de broche (27₁a, 29₁a) plus proche du curseur et à chaque fois l'une des deux unités de soutien de broche (27₂a, 29₂a) plus éloignées du curseur.

5. Dispositif de guidage linéaire selon l'une des revendications 1 à 4, **caractérisé en ce qu'**une unité de soutien de broche (27₁b, 27₂b) présente un corps de monture de broche (67b) fabriqué dans un matériau propice au glissement, en particulier une matière plastique, avec un perçage traversant (69b), qui est traversé par la broche (13b) de manière mobile par glissement.

6. Dispositif de guidage linéaire selon l'une des revendications 1 à 5, **caractérisé en ce qu'**une unité de soutien de broche comprend un écrou de soutien (135g) en prise filetée avec la broche d'entraînement (13g), écrou qui est monté immobile axialement, mais de façon rotative dans l'unité de soutien de broche, de telle sorte qu'une différence de vitesse, correspondant à une dépendance prédéfinie entre le mouvement de l'ensemble curseur et le mouvement de l'unité de soutien de broche concernée, entre ces deux mouvements longitudinaux est rendue possible par rotation de l'écrou de soutien (135g).

7. Dispositif de guidage linéaire selon l'une des revendications 1 à 6, **caractérisé en ce que** la base de guidage (1) présente au moins une surface de guidage (7) sur laquelle sont guidés aussi bien l'ensemble curseur (9) que les unités de soutien de broche (27₁, 29₁).

8. Dispositif de guidage linéaire selon l'une des revendications 1 à 6, **caractérisé en ce que**, pour le guidage des unités de soutien de broche et de l'ensemble curseur, au moins une surface de guidage séparée est prévue à chaque fois sur la base de guidage.

9. Dispositif de guidage linéaire selon l'une des revendications 1 à 8, **caractérisé en ce que** la base de guidage (1b) comprend un boîtier de guidage (51b) avec des parois (53b, 55b) délimitant une cavité de guidage (57b) et l'ensemble curseur (9b) et les unités de soutien de broche (27₁b, 27₂b) sont logées dans la cavité de guidage (57b), l'ensemble curseur (9b) traversant une ouverture longitudinale (59b) du boîtier de guidage (51b) et étant formé à l'extérieur de la cavité de guidage (57b) pour recevoir un objet à déplacer dans la direction de l'axe longitudinal.

10. Dispositif de guidage linéaire selon la revendication 9, **caractérisé en ce qu'**à l'intérieur de la cavité de guidage (57b), au moins un rail de guidage (3b) pour le guidage de l'ensemble curseur (9b) et/ou des unités de soutien de broche (27₁b, 27₂b) est fixé sur le boîtier de guidage (51 b).

11. Dispositif de guidage linéaire selon la revendication 9 ou 10, **caractérisé en ce que** le moyen de traction (31b, 41b) flexible au nombre d'au moins un s'étend au moins en partie à l'intérieur de la cavité de guidage (57b).

12. Dispositif de guidage linéaire selon la revendication 11, **caractérisé en ce que** le moyen de traction (31b, 41b) flexible au nombre d'au moins un est logé sur au moins une partie de sa longueur dans une rainure (77b) de réception de moyen de traction ouverte en direction de la cavité de guidage (57b), qui est réalisée dans l'une des parois (53b, 55b) délimitant la cavité de guidage (57b).

13. Dispositif de guidage linéaire selon la revendication 12, **caractérisé en ce que** le moyen de traction (31b, 41b) logé dans la rainure (77b) de réception de moyen de traction ou sa partie concernée passe en mouvement devant ou est fixé à une zone de contour de l'ensemble curseur (9b) voisine de cette rainure (77b) de réception de moyen de traction, et/ou passe devant ou est fixé à au moins une unité de soutien de broche (27₁b, 27₂b).

14. Dispositif de guidage linéaire selon la revendication 13, **caractérisé en ce que** le moyen de traction (31b, 41b) logé dans la rainure (77b) de réception de moyen de traction ou sa partie concernée est fixé à une saillie de l'ensemble curseur (9b) et/ou à une saillie (79b) d'au moins l'une des unités de soutien de broche (27₁b, 27₂b) qui dépasse à l'intérieur de la rainure (77b) de réception de moyen de traction.

15. Dispositif de guidage linéaire selon l'une des revendications 9 à 14, **caractérisé en ce que** le moyen de traction flexible (31b, 41b) au nombre d'au moins un s'étend sur au moins une partie de sa longueur dans un canal (83b) de réception de moyen de traction séparé de la cavité de guidage (57b).

16. Dispositif de guidage linéaire selon l'une des revendications 9 à 15, **caractérisé en ce que** la cavité de guidage (57b) est recouverte au niveau de son ouverture longitudinale (59b) par une bande de couverture (85b) qui est en liaison d'entraînement avec l'ensemble curseur (9b) ou passe à travers l'ensemble curseur (9b).

17. Dispositif de guidage linéaire selon l'une des revendications 9 à 16, **caractérisé en ce que** le moyen de traction flexible (31b, 41b) au nombre d'au moins un et/ou une bande de couverture (85b) en liaison d'entraînement avec l'ensemble curseur (9b) s'étend dans au moins une partie d'extrémité du boîtier de guidage (51b) sur des moyens de renvoi (37b, 47b) encapsulés par des moyens d'encapsulation (89b), ces moyens de renvoi (89b) pouvant être introduits dans la zone d'extrémité concernée du boîtier de guidage (51b) séparément des moyens d'encapsulation (89b), et les moyens d'encapsulation (89b) associés pouvant être fixés au boîtier de guidage (51b) et/ou à un rail de guidage (3b) de ce boîtier de guidage (51b) et/ou aux moyens de renvoi (37b, 47b) en position d'encapsulation par rapport aux moyens de renvoi (37b, 47b) après la mise en place des moyens de renvoi (37b, 47b).

18. Dispositif de guidage linéaire selon la revendication 6, **caractérisé en ce que** l'unité de soutien de broche comprend un entraînement à vis à billes avec au moins une rangée de billes sans fin (137g) qui, sur une partie de sa longueur, suit une voie filetée sur la surface de circonférence intérieure de l'écrou de soutien (135g) et passe sur une course résiduelle à travers un canal de retour de l'écrou de soutien (135g).
